Europäisches Patentamt

European Patent Office

Office européen des brevets

(11) Publication number: **0 268 342**
**A1**

## EUROPEAN PATENT APPLICATION

(21) Application number: **87301081.3**

(22) Date of filing: **06.02.87**

(51) Int. Cl.⁴: **G06F 15/06**

(30) Priority: **18.11.86 GB 8627490**

(43) Date of publication of application:
**25.05.88 Bulletin 88/21**

(84) Designated Contracting States:
**AT BE CH DE ES FR GB IT LI NL SE**

(71) Applicant: **The British Petroleum Company p.l.c.**
**Britannic House Moor Lane**
**London EC2Y 9BU(GB)**

(72) Inventor: **Cromarty, Andrew David**
**15 Avocet Crescent**
**Owlsmoor, Camberly Surrey, GU15 4XN(GB)**
Inventor: **Harrison, John Norman**
**The British Petroleum Company p.l.c.**
**Chertsey Road**
**Sunbury-on-Thames Middlesex TW16 7LN(GB)**

(74) Representative: **Ryan, Edward Terrence et al**
**BP INTERNATIONAL LIMITED, Patents Division Chertsey Road**
**Sunbury-on-Thames Middlesex, TW16 7LN(GB)**

(54) Coordination of processing elements in a multiprocessor computer.

(57) Improved processor element (PE) synchronisation is provided for a SIMD or MISD computer having a controller (4) linked to a plurality of PEs (2) by a global bus.

The controller has a code/data-ready means to signal to the PEs that data or an instruction is available on the bus. The PEs each have a processor-ready means (23) signal to the controller that they are ready to read the data or instruction, and a read-enable means actuated by a code/data-ready signal from the controller to allow the PE to read the data or instruction.

A processor-ready signal is initiated when there is no code/data-ready signal from the controller. A code/data-ready signal is only initiated when all the PEs give a ready signal and is only terminated when no PE gives a ready signal.

FIG. 4

# COORDINATION OF PROCESSING ELEMENTS IN A MULTIPROCESSOR COMPUTER

## Technical Field

This patent application is concerned with improvements relating to multiple processor computer systems. In particular it relates to a method of coordinating a plurality of processing elements so that they can fetch data from a higher level controller in a controlled and coordinated manner.

## Background

It has been proposed to produce multiprocessor computer systems (often called parallel processors) consisting of a plurality of independent computers called "Processing Elements" (PEs) which cooperate in the processing of data. One mode of operation of these computers is termed the "SIMD" mode, in which each PE executes the same instruction at the same time, but on different data contained within each PE. Another mode of operation of such computers is termed the "MISD" mode, in which each PE executes different instructions or data but operates on a common stream of data. Clearly in such arrangements these PEs have to be coordinated and supplied with the correct instructions or data at precisely the right time in order to successfully complete the data processing task.

This invention concerns itself with a method for achieving this aim in multiprocessor computer systems where the PEs are all connected to a controller via a so-called "global bus". This controller is the device which controls the processing elements, and supplies them with data or instructions, when requested, e.g. the stream of instructions which control the operation of the processors on the PEs.

According to the present invention there is provided a multiprocessor computer comprising
a controller,
a plurality of processing elements, each having a processor and associated memory, and
a global bus connecting the controller to the processing elements by which instructions or data can be transmitted to processing elements participating in a computation in which the same instructions or data are fetched by all the participating processing elements
wherein
the controller has a code/data-ready means for signalling to the processing elements that an instruction or data may be read on the global bus when the code/data-ready means is actuated, and for maintaining the instruction on the bus while the code/data-ready means is actuated,
wherein
each processing element has

(i) read-enable means for enabling the processing element to read an instruction or data on the global bus which means is
(a) actuated by the actuation of the code/data-ready means and is
(b) deactuated when the instruction or data has been read, and

(ii) processor-ready means for signalling to the controller when the processing element is ready for an instruction or data, which means is
(a) deactuated when the processing element has read the instruction or data, and is
(b) disabled until the code/data-ready means has been deactuated, and wherein
the controller has

(i) means for actuating the code/data-ready means only when all the processing elements participating in a computation using common instructions or data have actuated their processor-ready means, and

(ii) means for deactuating the code/data-ready means only when no processing element participating in the computation is signalling that it is ready to receive an instruction or data.

According to another aspect of the present invention there is provided a method of operating a multiprocessor computer comprising a controller and a plurality of processing elements linked to the controller by a global bus over which instructions or data may be passed to the processing elements in a synchronised way, and a plurality of control wires by which control signals may be exchanged between the control and the processing elements and wherein each processing element can signal to the controller that it is ready to receive instructions or data and the controller can signal to the processing elements that there is an instruction or data on the bus to be read,
which method comprises

(a) initiating a processor-ready signal to the controller from processing element only, (i) when the processing element is ready to read data or an instruction, and (ii) the controller is not signalling that there is data or an instruction to be read,

(b) initiating a code/data-ready signal from the controller to the processing elements only when, (i) there is data or an instruction on the global bus to be read, and (ii) all the processing elements are maintaining a processor-ready signal,

(c) reading the instruction or data from the global bus into each processing element while the code/data-signal signal is maintained,

(d) terminating the processor-ready signal from a processing element when that processing element has read the instruction or data on the global bus, and

(e) terminating the code/data-ready signal from the controller when all the processor-ready signals have terminated.

The present invention may be applied to computer working in both SIMD and MISD mode.

This invention is equally effective when co-ordinating the fetching of common instructions or common data. However, for the sake of clarity, the following description explains its operation in terms of fetching instructions only. In this case, the code/data-ready means is acting as a code-ready means.

Computers generally work with groups (words) of fixed length of binary digits (bits). An instruction may in some cases take up several successive words. In the description a reference to the fetching of an instruction is a reference to the fetching of an individual word which may contain a whole instruction or part of an instruction. Similarly references to fetching data are references to fetching the individual data words.

The operation of the synchronisation system of the invention in a SIMD computer is as follows. At the start of a computation using common instructions supplied to the processing elements (PEs) on the global bus all the PEs taking part in the computation will be ready to receive instructions and an instruction will be ready on the global bus. The code-ready means in the controller will then be actuated and the PEs will be enabled to read data. As each PE reads the instruction it will deactuate its processor-ready means. As long as one processor-ready means remains actuated the code-ready means will not be deactuated, and the instruction will be maintained on the global bus. When the code-ready means is deactuated the instruction on the global bus may be replaced by a fresh instruction. The read-enable means on each processor is deactuated when the instruction is read. It can only be actuated by a new code-ready signal. A new code-ready signal can only be sent if all the PEs have actuated their processor-ready means. The processor-ready means is deactuated when the instruction has been read and is disabled so that it cannot be reactuated if the processor has completed its computation using the instruction supplied to it. It is only re-enabled so as to be capable of actuation when the code-ready means is deactuated. A PE can only re-actuate its processor-ready means when the code-ready means has been deactuated, so each PE can only read an instruction once during each instruction-transfer operation.

Multiprocessor computers comprising a plurality of PEs and a controller for carrying out SIMD (single instruction multiple data) computations are well-known and a detailed description of their operation and construction is therefore not necessary. It has been proposed to build multiprocessor computers which can operate, at least to some extent, in both SIMD mode and MIMD (multiple instruction multiple data) mode. In this specification when reference is made to certain steps taking place when all PEs have actuated a processor-ready means this is a reference to all the PEs participating in the SIMD computation.

The coordination technique of the present invention is particularly useful when applied to a SIMD multi-processor computer as disclosed in our copending application (Case 6147/6326).

The invention will now be illustrated by reference to the following drawings in which

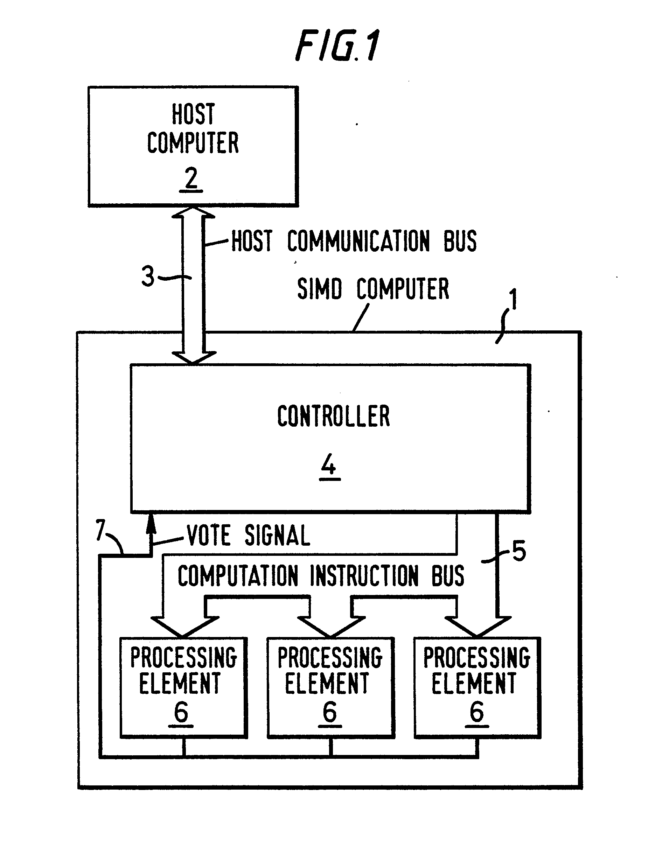

Figure 1 is a diagrammatic representation of a SIMD computer having a controller and a plurality of processing elements to which the coordination technique of the invention may be applied,

Figure 2 is a diagrammatic representation of the controller of the computer of Figure 1,

Figure 3 is a diagrammatic representation of a processing element indicating the coordination circuitry, and

Figure 4 is a diagrammatic representation of the controller and some processing elements indicating the way in which the lines from the processing elements are combined,

Figure 5 represents the signals generated by the arrangement of Figure 4.

In the description below the following conventions are used. Signals may take one of the two Boolean values TRUE and FALSE. The Boolean operator * represents the logical conjunction of two signals; i.e. A * B is TRUE if A and B are both TRUE, and is FALSE otherwise. The Boolean operator + represents the logical disjunction of two signals; i.e. A + B is TRUE if either A or B or both are TRUE, and is FALSE otherwise. (Negation is represented by NOT; e.g. NOT TRUE is FALSE).

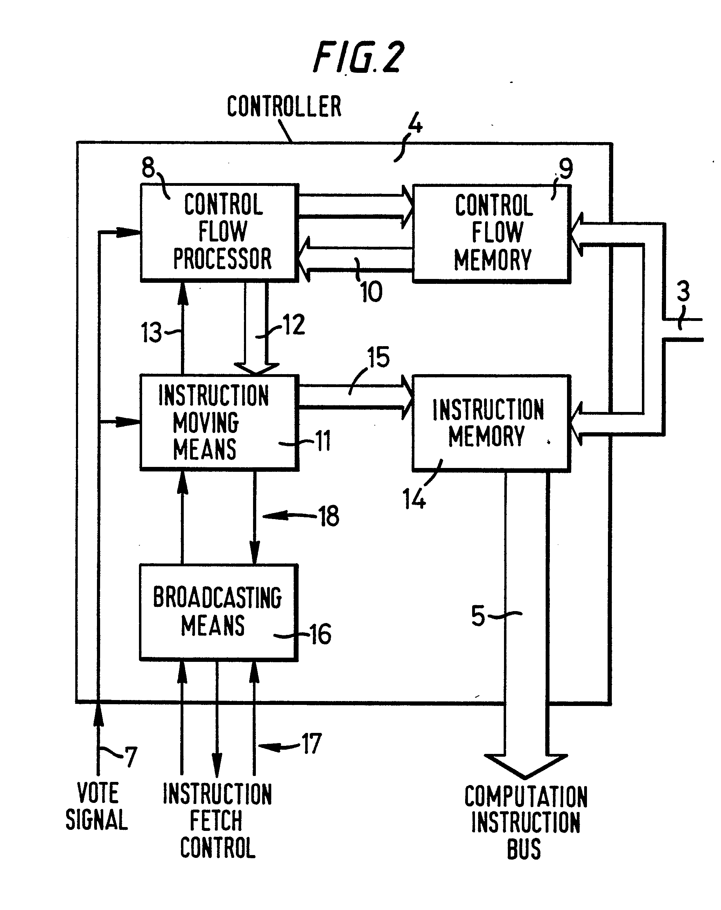

Figure 2 shows a SIMD computer (1) connected to a host computer (2) by a communication bus (3). The computer (1) comprises a controller (4) linked by a communication instruction bus (5) to a plurality of processing elements (6), of which only three are shown here in the interests of clarity.

Figure 2 shows the internal arrangement of the controller. There is a line (7) by which a signal known as a vote signal can be communicated from the processing elements to a control flow processor (8) and an instruction moving means (11) in the controller. This is concerned with effecting control flow within programs executed in the processing elements but is not directly concerned with the coordination technique of the present invention. The control flow processor (8) fetched instructions from a control flow memory (9) along bus (10). Address information is passed from control flow processor along bus (12) to instruction moving means (11), which in turn causes instruction moving means (11) to place an instruction from instruction memory (14) on the computation instruction bus (5).

It is necessary however to arrange that instructions are effectively received by all the processing elements which require them and that an instruction transmitted from the instruction memory remains on the computation instruction bus as long as required but no longer. This function is carried out by the broadcasting means (16) which sends and receives signals from the processing elements and in turn passes signals to the instruction moving means. As shown in Figure 2 there are two signal lines from the processing elements to the broadcasting means and one signalling line from the broadcasting means the processing elements (indicated generally at 17). signals can be passed between the broadcasting means and the instruction moving means by control lines (18).

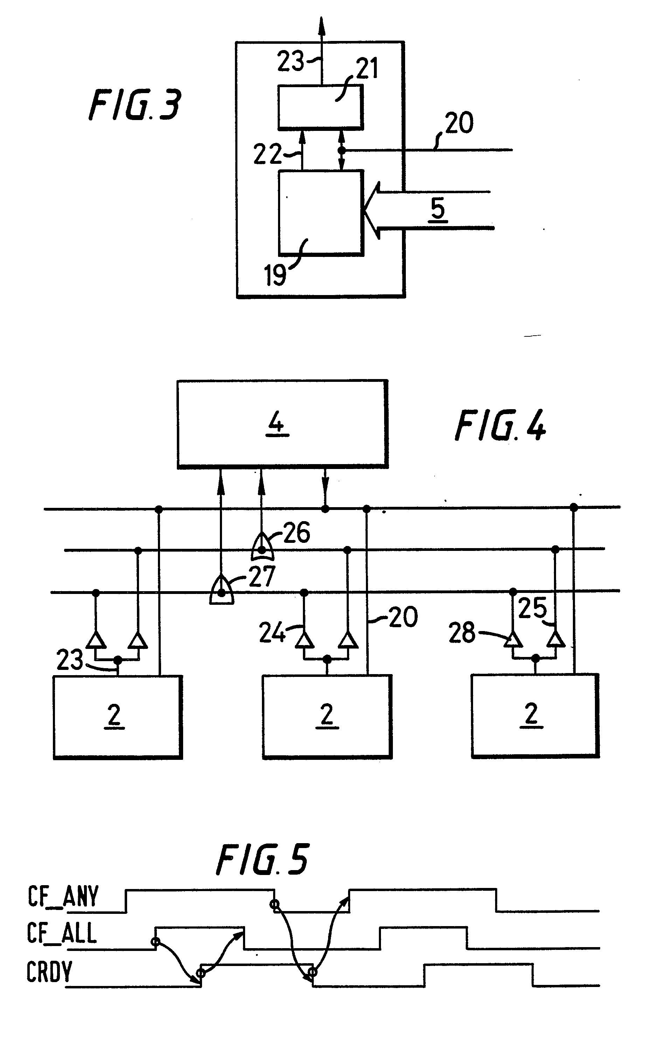

Referring now to Figure 3 the computation instruction bus (6) is connected to a processor (19). The processor (19) may be a commercially available microprocessor.

The processor (19) incorporates a latch circuit which acts as the read-enable means. This is actuated by a signal on line (20) from the controller, and is deactuated when the instruction has been read. Such latch circuits can be readily implemented by those skilled in the art.

Line (20) is also connected to a coordination unit (21). The coordination unit (21) is a finite state machine which acts as the processor-ready means. Finite state machine and ways of implementing them are well known.

Once the required functions have been explained by the present specification, a skilled person will be readily able to design a finite state machine to implement them.

Coordination unit (21) is linked to processor (19) by a control wire (22) by which the processor (19) can signal to the coordination unit (17) that the processor has read an instruction. The coordination unit produces a signal on line (23), in response to the input signals on lines (20) and (22), to indicate when the processing element is ready for an instruction. The signal on line (23) is used to generate two signals which are passed to the controller, as explained below with reference to Figure 4.

In the embodiment described above the broadcasting means (16) signals by line (20) that an instruction may be read on the global bus (i.e. the computation instruction bus (5)) and in cooperation with the instruction moving means maintains the instruction on the bus as long as the code-ready means is actuated. The broadcasting means also incorporates the means for actuating and deactuating the code-ready means required by the invention.

Referring now to Figure 4, signals identified as CF_ALL and CF_ANY on lines (24 and 25) are derived from the signal on line (23), which may be termed the PRDY line. (CF_ is a mnemonic for code-fetch and PRDY is a mnemonic for processor-ready). If there are n PEs (where n is an integer greater than 1) then CF_ANY and CF_ALL are signals received by the controller and generated by the PRDY signals as follows. CF ANY is defined as:

$$CF\ ANY = PRDY[1] + PRDY[2] + \ldots\ldots + PRDY[n]$$

assuming there are n PEs. In other words CF_ANY is true if any of the PRDY are true. Similarly CF_ALL is defined as:

$$CF\_ALL = PRDY[1] * PRDY[2] * \ldots * PRDY[n].$$

In other words CF_ALL is true if all of the PRDY are true.

CF_ANY and CF_ALL may be obtained (in this embodiment) by wired-OR and wired-AND circuits (indicated at (26) and (27) respectively). Buffers (28) prevent the state of the CF_ANY and CF ALL links affecting the PRDY link (and thus one another).

CRDY ("code-ready") is a signal that the controller sends to the PEs to complete the handshake. The controller can therefore regulate its delivery of instruction bytes or words to the array of PEs by monitoring the state of the two signalling lines (24) and (25) and altering the state of CRDY accordingly. The way in which this is done is described next, with reference to Figures 4 and 5.

When a particular PE is ready to initiate an instruction transfer, it sets its PRDY signal to TRUE. CF_ANY is the disjunction of the PRDY signals, so when it is TRUE it indicates to the controller that at least one of the PEs is requesting an instruction transfer. When all of the PEs are ready, CF_ALL, which is the conjunction of the PRDY signals, becomes TRUE. At this point, assuming that there is an instruction available for transfer, the controller asserts the CRDY line to TRUE, indicating to the PEs that the instruction is available. When the first PE has accepted that instruction it sets its PRDY signal to FALSE, causing the CF_ALL to be set FALSE. The CF_ANY signal remains TRUE until the last PE sets its PRDY signal FALSE, indicating to the controller that the instruction transfer is complete. The controller responds by setting the CRDY signal to FALSE.

The CRDY signal link and the circuitry producing the CRDY signal corresponds to the code-ready means of the invention, which also has the function of maintaining the instruction on the bus as long as the code-ready means is actuated (i.e. as long as CRDY is TRUE). The read-enable means is only actuated when CRDY goes from FALSE to TRUE and, once the instruction has been read, is disabled until CRDY goes from TRUE to FALSE.

The PRDY link and associated circuitry in the PE correspond to the processing-element ready means.

The CF_ALL and CF_ANY links in combination with circuitry associated with the controller are responsible for the actuation and deactuation of the code-ready means i.e. for the CRDY signal becoming TRUE or FALSE.

In the description the following conventions are used to describe the state of a wire. In binary digital logic circuits, wires in the steady state may assume either a higher or a lower voltage. If a positive logic convention is being used, a wire that is at the higher voltage corresponds to a TRUE signal, and one at the lower voltage to a FALSE signal. If a negative logic convention is being used, the opposite is true, i.e. a wire at the higher voltage corresponds to a FALSE signal, and a wire at the lower voltage corresponds to a TRUE signal.

Figure 5 shows the signal on the three lines CF_ANY, CF_ALL and CRDY, with FALSE being indicated by the lower voltage-level for each signal and TRUE on the higher level, i.e. using positive logic convention.

On reset at the beginning of a computation all three lines are low. Then some of the PEs will request an instruction and so CF_ANY will rise. Eventually all of the PEs will request an instruction whereupon CFALL will also rise. When CF_ALL has risen and the controller has an instruction to send, CRDY rises. CF_ANY and CF_ALL must stay high until CRDY has risen (circuitry is provided to ensure this). Once CRDY has risen the PEs each read the instruction and independently lower their PRDY lines. As soon as the first PE lowers its PRDY line CF_ALL will fall, and when the last PE lowers its PRDY line CF_ANY will fall. When CF_ANY falls the controller can lower CRDY. Once CRDY is low the handshake cycle is complete, and the PEs may then raise their PRDY lines to begin the next cycle.

A convenient way of generating the CF_ALL and CF_ANY signals described above is by using wired-AND and wired-OR combinations of PRDY.

In order to implement a wired-OR combination it may be convenient to use a negative logic convention for the CF_ANY wire and to use circuitry corresponding to a positive logic wired AND.

The detailed description of the invention has been written in terms of fetching instructions in a SIMD computer. As indicated above the invention can also be applied to MISD computers. In such computers the references to fetching instructions are replaced by references to fetching data. Thus, the CF_ALL signal ("code-fetch-all") signal would, for example, correspond to a DF_ALL signal ("data-fetch-all") signal in a MISD computer.

## Claims

1. A multiprocessor computer comprising a controller, a plurality of processing elements, each having a processor and associated memory, and a global bus connecting the controller to the processing elements by which instructions or data can be transmitted to processing elements participating in a computation in which the same instructions or data are fetched by all the participating processing elements wherein the controller has a code/data-ready means for signalling to the processing elements that an instruction or data may be read on the global bus when the code-ready means is actuated, and for maintaining the instructions or data on the bus while the code/data-ready means is actuated, wherein each processing element has (i) read-enable means for enabling the processing element to read an instruction or data on the global bus which means is (a) actuated by the actuation of the code/data-ready means and is (b) deactuated when the instruction or data has been read, and (ii) processor-ready means for signalling to the controller when the processing element is ready for an instruction or data, which means is (a) deactuated when the processing element has read the instruction, and is disabled until the code/data-ready means has been deactuated, and wherein the controller has (i) means for actuating the code/data-ready means only when all the processing elements participating in a computation using only common instructions have actuated their processor-ready means, and (ii) means for deactuating the code/data-ready means only when no processing element participating in the computation is signalling that it is ready to receive an instruction.

2. A multiprocessor computer according to claim 1 wherein the processor-ready means is linked to the controller by a code/data-fetch-all line and a code/data-fetch-any line and a code/data-ready line,

the code/data-fetch-all lines are ANDed together such that they are TRUE only if all the processor-ready means are TRUE, and the code/data-fetch-any lines are ORed together such that they are TRUE if any processor-ready means is TRUE,

the code/data-ready means is actuated only after the code/data-fetch-all lines go from FALSE to TRUE,

the code/data-ready means is deactuated only when the code/data-fetch-any lines go from TRUE to FALSE, and the processor-ready means is re-enabled by the code/data-ready means going from TRUE to FALSE.

3 A method of operating a multiprocessor computer comprising a controller and a plurality of processing elements linked to the controller by a global bus over which instructions or data may be passed to the processing elements in a synchronised way, and a plurality of control wires by which control signals may be exchanged between the control and the processing elements and wherein each processing element can signal to the controller that it is ready to receive instructions or data and the controller can signal to the processing elements that there is an instruction or data on the bus to be read,

which method comprises

(a) initiating a processor-ready signal to the controller from processing element only, (i) when the processing element is ready to read data or an instruction, and (ii) the controller is not signalling that there is data or an instruction to be read,

(b) initiating a code/data-ready signal from the controller to the processing elements only when, (i) there is data or an instruction on the global bus to be read, and (ii) all the processing elements are maintaining a processor-ready signal,

(c) reading the instruction or data from the global bus into each processing element while the code/data-ready signal is maintained,

(d) terminating the processor-ready signal from a processing element when that processing element has read the instruction or data on the global bus, and

(e) terminating the code/data-ready signal from the controller when all the processor-ready signals have terminated.

# FIG.1

```
┌─────────────────┐
│      HOST       │
│    COMPUTER     │
│        2        │
└─────────────────┘
         ↕
         │────── HOST COMMUNICATION BUS
    3 ───┤
         │         SIMD COMPUTER          1
┌────────┼───────────────────────────────┐
│   ┌────┴──────────────────────────┐    │
│   │                               │    │
│   │         CONTROLLER            │    │
│   │                               │    │
│   │             4                 │    │
│   └───────────────────────────────┘    │
│  7↑───VOTE SIGNAL                 │     │
│   ┌─┘                          5──┤     │
│   │  COMPUTATION INSTRUCTION BUS  │     │
│   ⇓    ⇓         ⇓       ⇓        ⇓     │
│ ┌──────┐    ┌──────┐    ┌──────┐       │
│ │PROCES│    │PROCES│    │PROCES│       │
│ │SING  │    │SING  │    │SING  │       │
│ │ELEMENT│   │ELEMENT│   │ELEMENT│      │
│ │  6   │    │  6   │    │  6   │       │
│ └──────┘    └──────┘    └──────┘       │
└────────────────────────────────────────┘
```

0 268 342

## FIG.2

CONTROLLER

8 — CONTROL FLOW PROCESSOR

9 — CONTROL FLOW MEMORY

10

4

3

13

12

INSTRUCTION MOVING MEANS — 11

15

INSTRUCTION MEMORY

14

18

BROADCASTING MEANS — 16

5

7

17

VOTE SIGNAL

INSTRUCTION FETCH CONTROL

COMPUTATION INSTRUCTION BUS

FIG.3

FIG.4

FIG.5

CF_ANY
CF_ALL
CRDY

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 085 520 (HUGHES AIRCRAFT CO.)<br>* Figures 4,5a; page 11 - page 13, line 14; page 38, line 26 - page 40, line 29 * | 1-3 | G 06 F 15/06 |
| A | EP-A-0 136 218 (FAIRCHILD CAMERA & INSTRUMENT CORP.)<br>* Figure 2; page 19, lines 11-33 * | 1-3 | |
| A | PROCEEDINGS OF THE 1982 INTERNATIONAL CONFERENCE ON PARALLEL PROCESSING, 24th-27th August 1982, pages 353-362, IEEE, US; J.T. KUEHN et al.: "Design and simulation of an MC68000-based multimicroprocessor system"<br>* Page 354 - page 356, left-hand column, line 22; figures 1,2 * | 1-3 | **TECHNICAL FIELDS SEARCHED (Int. Cl.4)**<br><br>G 06 F |
| A | EP-A-0 035 647 (IBM) | | |

The present search report has been drawn up for all claims

| Place of search | Date of completion of the search | Examiner |
|---|---|---|
| THE HAGUE | 17-06-1987 | TIBAUX M.J.P.G. |